# FASCICULE DE BREVET EUROPEEN

(11) **EP 0 391 801 B1**
(45) Date de publication et mention de la délivrance du brevet: **17.02.1993**
(21) Numéro de dépôt: 90400927.1
(22) Date de dépôt: 04.04.1990
(51) Int. Cl.: G01N 13/02

(54) **Perfectionnements aux procédés et dispositifs pour déterminer l'angle de contact d'une goutte de liquide posée sur un substrat**
Vorrichtung und Verfahren zur Bestimmung des Randwinkels eines Flüssigkeitstropfens auf einem Substrat
Method and device for determining the angle of contact of a drop of liquid on a substrate

(30) Priorité: 06.04.1989 FR 8904530
(43) Date de publication de la demande: 10.10.1990
(73) Titulaire: PHOTONETICS S.A., 78160 Marly le Roi (FR)
(72) Inventeur: Martin, Philippe, F-94260 Fresnes (FR); Le Boudec, Gilles, La Roseraie, F-78750 Mareil Marly (FR)
(74) Mandataire: Fréchède, Michel

(56) Documents cités:
- EP-A- 0 199 312
- FR-A- 2 574 180
- PATENT ABSTRACTS OF JAPAN, vol. 6, no. 159 (P-136)[1037], 20 août 1982; & JP-A-57 76 439 (DAINIPPON INSATSU K.K.) 13-05-1982
- PATENT ABSTRACTS OF JAPAN, vol. 9, no. 227 (P-388)[1950], 13 septembre 1985; & JP-A-60 85 353 (FUJISHASHIN FILM K.K.) 14-05-1985

## Description

La présente invention concerne la mesure de l'angle de contact d'une goutte de liquide posée sur un substrat, solide ou liquide, disposé horizontalement.

On sait qu'on peut déduire de la valeur de l'angle de contact entre une goutte liquide et la surface horizontale d'un substrat qui porte la goutte certaines propriétés du substrat, notamment sa mouillabilité et son état de surface, propriétés utiles en recherche fondamentale ou appliquée.

Le brevet FR-A-2.574.180 du Centre National de la Recherche Scientifique, qui rappelle les principales applications de la mesure des angles de contact, décrit un procédé et un dispositif pour déterminer l'angle de contact d'une goutte de liquide posée sur un substrat horizontal, solide ou liquide, dans lesquels
on dirige, perpendiculairement au substrat, un faisceau primaire de lumière parallèle pour éclairer une zone de l'ensemble constitué par la goutte de liquide et le substrat horizontal (zone qui englobe l'interface entre la périphérie de la goutte et le substrat), en produisant, par interaction avec la goutte et le substrat, un faisceau secondaire, et
on mesure l'étendue de la transition d'éclairement que présente le faisceau secondaire, en correspondance avec la périphérie de la goutte, sur une surface réceptrice interceptant ce faisceau secondaire.

La mise en oeuvre du procédé et du dispositif selon le brevet précité, qui donne généralement des résultats satisfaisants en cas d'observation visuelle de la surface réceptrice, qui est alors une surface dépolie, ne permet par contre pas, en cas d'utilisation d'une caméra de visualisation de la transition d'éclairement, d'effectuer pour tous les couples goutte-substrat des mesures précises, en particulier lorsque l'angle de contact entre la goutte et la surface du substrat est relativement élevé, par exemple proche de 45°, et/ou lorsque le substrat est très diffusant.

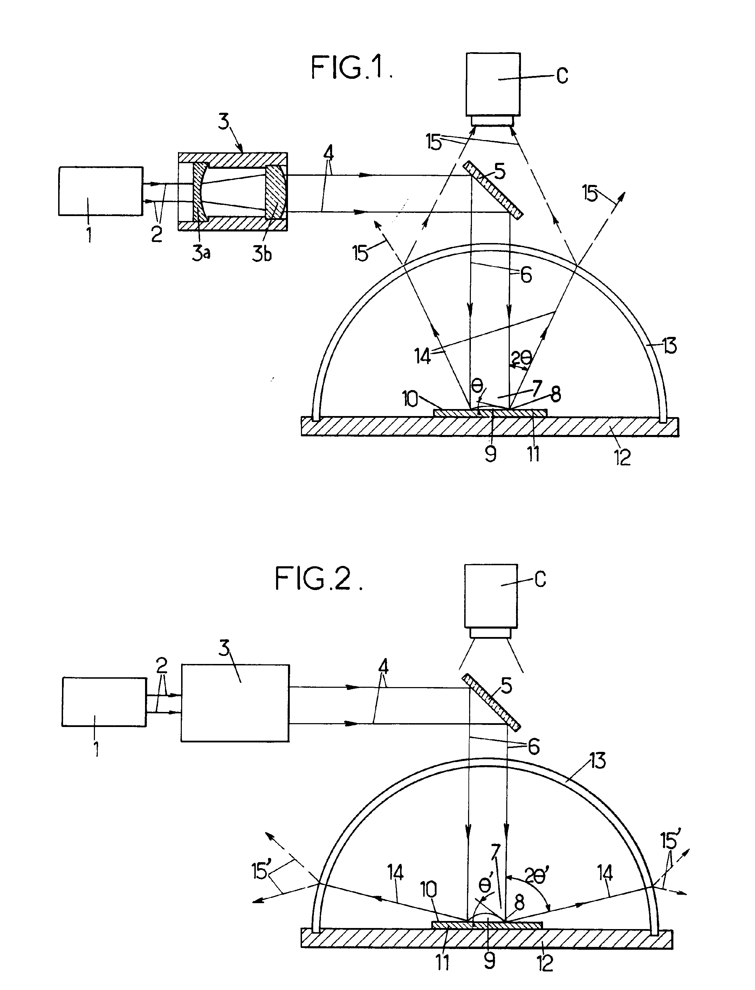

En effet, si dans le cas, illustré sur la figure 1, d'un angle de contact faible, il est possible, avec un dispositif du type de celui décrit dans le brevet 2.574.180 précité, de remplacer un examen visuel par une image photographique prise par une caméra C, il n'en est plus de même dans le cas, illustré sur la figure 2, d'un angle de contact s'approchant de 45°, et ceci pour la raison suivante.

Les figures 1 et 2 reprennent sensiblement, mais en la simplifiant, la figure 8 du brevet précité.

Sur ces figures 1 et 2, on a désigné :
par 1 un laser émettant un faisceau 2 de rayons horizontaux et parallèles,
par 3 un système optique afocal réalisant un élargissement du faisceau 2 en un faisceau 4 plus étendu, mais également formé de rayons horizontaux et parallèles, ce système optique afocal étant détaillé uniquement sur la figure 1 qui illustre une lentille plan-concave 3a et une lentille plan-convexe 3b,
par 5 un miroir de renvoi, incliné de 45° sur la verticale, qui produit par réflexion le faisceau primaire 6 de lumière parallèle, de direction verticale, qui vient éclairer, sur l'ensemble à observer, une zone 7 qui englobe l'interface entre la périphérie 8 de la goutte 9 et la surface horizontale 10 du substrat 11, par exemple solide, porté par un porte-échantillon 12, de manière déplaçable, et
par 13 une surface réceptrice interceptant le faisceau secondaire 14 résultant de l'interaction du faisceau primaire avec la goutte 9 et le substrat 11.

Sur les figures 1 et 2 on a illustré spécialement dans les faisceaux primaire 6 et secondaire 14 les rayons dirigés sur et provenant de la périphérie 8 de la goutte 9, c'est-à-dire de l'interface goutte/substrat, l'angle de ces rayons 14 du faisceau secondaire avec la verticale, donc avec les rayons 6 correspondants du faisceau primaire, étant le double (2ϑ) de l'angle de contact goutte/substrat, noté ϑ.

Si une caméra C peut, dans le cas de la figure 1, lorsque l'angle de contact ϑ est relativement faible (par exemple ne dépassant pas 10 à 20°), recevoir une grande partie des rayons, tels que 15, en provenance de la surface réceptrice 13 et correspondant aux rayons 14 du faisceau secondaire issus de la périphérie 8 de la goutte 9, il n'en est plus de même dans le cas de la figure 2, lorsque l'angle de contact ϑ′ est relativement proche de 45°, par exemple de l'ordre de 40° et donc l'angle 2ϑ′ de l'ordre de 80°, car alors la caméra C ne reçoit pratiquement plus de rayons 15′ en provenance de la surface réceptrice 13 et correspondant aux rayons du faisceau secondaire 14 issus de la périphérie 8 de la goutte 9.

Par conséquent si la transition d'éclairement correspondant à la périphérie 8 de la goutte 9 est aisément repérable par la caméra C de la figure 1 qui reçoit de nombreux rayons de la surface 13, par contre cette transition est difficile à observer par la caméra C de la figure 2 qui reçoit très peu de rayons en provenance de cette surface 13.

Pour permettre d'observer, au moyen d'une caméra, la transition d'éclairement correspondant à la périphérie de la goutte dans d'excellentes conditions, même pour un angle de contact relativement élevé, pouvant aller jusqu' aux environs de 45°, on prévoit, conformément à l'invention, de constituer la surface réceptrice du faisceau secondaire par une surface diffusante en réflexion et de disposer une surface réfléchissante pour renvoyer la lumière en provenance de cette surface réceptrice vers la caméra, de manière à concentrer sur l'objectif de celle-ci au moins la majorité des rayons formant le faisceau secondaire et correspondant notamment à la périphérie de la goutte.

L'invention a d'abord pour objet un procédé pour déterminer l'angle de contact d'une goutte de liquide posée sur un substrat, pour tout angle de contact inférieur à 45°, consistant à diriger perpendiculairement au substrat un faisceau primaire de lumière parallèle pour éclairer une zone qui englobe l'interface entre la périphérie de la goutte et le substrat, à déterminer la zone de transition d'éclairement, que présente un faisceau secondaire résultant de l'interaction du faisceau primaire avec la goutte et le substrat, sur au moins une surface réceptrice interceptant ce faisceau, et caractérisé en ce que ladite surface réceptrice est une surface diffusante en réflexion, en ce qu'on prévoit une surface réfléchissante disposée à l'intérieur de ladite surface réceptrice diffusante pour renvoyer les rayons lumineux provenant de ladite surface réceptrice diffusante, et en ce que les rayons réfléchis par ladite surface réfléchissante sont collectés par une caméra.

L'invention a également pour objet un dispositif, pour la mise en oeuvre du procédé susvisé, comprenant un support propre à maintenir horizontal un substrat sur lequel est posée une goutte de liquide, une source de lumière associée à des moyens optiques pour former à partir de la source de lumière un faisceau primaire de lumière parallèle dirigée perpendiculairement au substrat, au moins une surface réceptrice entourant le substrat pour intercepter le faisceau secondaire en retour produit par interaction du faisceau primaire avec la goutte et le substrat, et caractérisé en ce que ladite surface réceptrice est constituée par une surface diffusante en réflexion, en ce que l'on dispose une surface réfléchissante à l'intérieur de ladite surface réceptrice diffusante, pour réfléchir le faisceau de rayons renvoyés par ladite surface réceptrice diffusante,et en ce qu'il comporte une caméra disposée pour collecter les rayons réfléchis par ladite surface réfléchissante.

L'invention pourra, de toute façon, être bien comcomprise à l'aide du complément de description qui suit, ainsi que des dessins ci-annexés, lesquels complément et dessins sont, bien entendu, donnés surtout à titre d'indication.

Les figures 1 et 2, déjà utilisées ci-dessus, illustrent schématiquement les problèmes posés par la mise en oeuvre d'un dispositif selon la figure 8 du brevet français précité lorsqu'on veut utiliser une caméra pour l'observation de la surface réceptrice du faisceau secondaire, respectivement dans le cas d'un angle de contact relativement faible et d'un angle de contact relativement élevé.

La figure 3 illustre un mode de réalisation d'un dispositif doté des perfectionnements selon l'invention.

La figure 4 est une variante du mode de réalisation de la figure 3.

La figure 5 montre les problèmes posés par la mise en oeuvre d'un dispositif selon le brevet français précité et selon les figures 3 et 4 de la présente demande lorsque le substrat est en un matériau diffusant.

La figure 6 montre schématiquement comment cet inconvénient peut être évité par la mise en oeuvre d'une caractéristique accessoire de l'invention.

La figure 7, enfin, illustre l'application de la caractéristique de la figure 6 à un dispositif selon l'invention, la figure 7 étant une variante de la figure 3.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser des perfectionnements aux procédés et dispositifs pour déterminer l'angle de contact d'une goutte de liquide posée sur un substrat, on s'y prend comme suit ou d'une manière analogue.

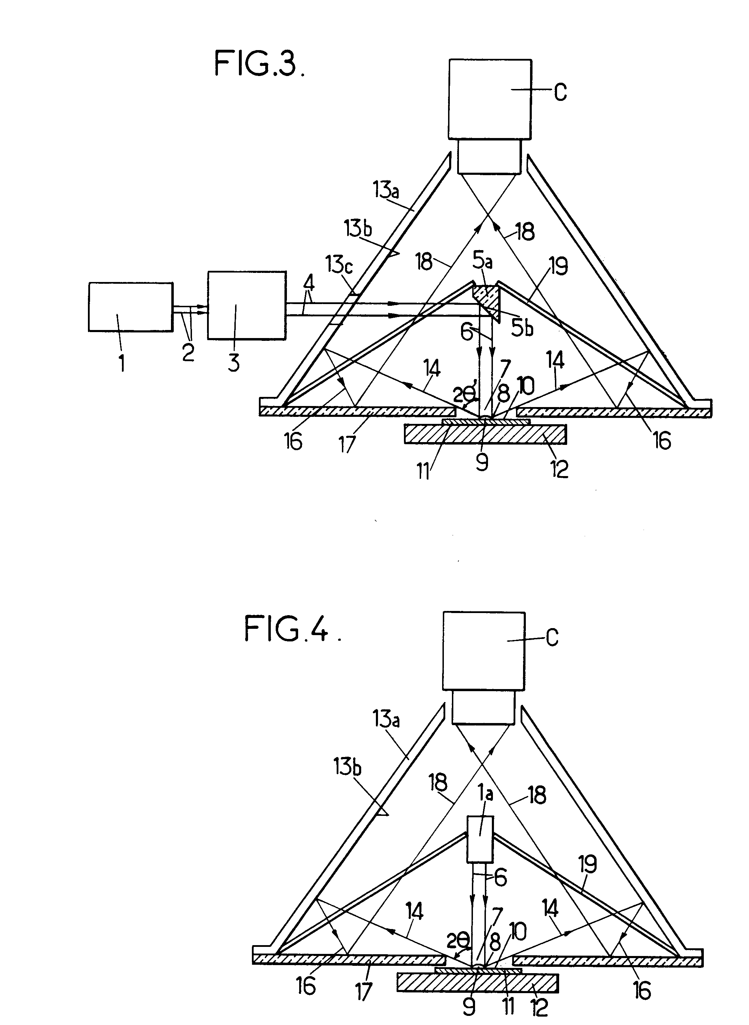

Un premier mode de réalisation d'un dispositif selon l'invention est illustré sur la figure 3.

Sur la figure 3 on retrouve un laser 1 émettant un faisceau 2 de rayons horizontaux et parallèles qui est élargi, par un système optique afocal 3, en un faisceau 4 plus étendu, mais également formé de rayons horizontaux et parallèles.

Un prisme 5a, à face de renvoi 5b inclinée de 45° sur la verticale, réfléchit le faisceau horizontal 4 en un faisceau primaire 6 de lumière parallèle, de direction verticale, qui vient éclairer une zone 7 qui englobe l'interface entre la périphérie 8 de la goutte 9 et la surface horizontale 10 du substrat 11 portée de manière déplaçable par un support ou porte-échantillon 12.

Conformément à une première caractéristique de l'invention, les rayons 14 du faisceau secondaire provenant de l'interface entre la goutte 9 et le substrat 11, qui forment un angle égal à 2ϑ′ avec la verticale, c'est-à-dire avec les rayons 6, atteignent un élément récepteur 13a en un matériau diffusant en réflexion avec une face réfléchissante 13b. En particulier l'élément 13a peut être constitué par une feuille ou tôle d'aluminium peinte en blanc sur sa face 13b.

L'élément 13a est avantageusement de forme tronconique, l'angle au sommet du cône correspondant au champ angulaire de la caméra C.

Grâce à cette surface réfléchissante 13b les rayons 14 du faisceau secondaire sont réfléchis en tant que rayons 16. La surface conique 13a est percée d'un orifice 13c pour le passage du faisceau 4.

Selon une seconde caractéristique de l'invention, on prévoit un miroir 17 formant surface réfléchissante pour les rayons 16 qui sont renvoyés en tant que rayons 18 qui atteignent en grande partie la caméra C, notamment lorsque l'angle au sommet du cône formé par l'élément 13a correspond au champ de la caméra, lorsque la périphérie de la petite base du tronc de cône entoure la caméra C et lorsque la périphérie de la grande base de celui-ci entoure la surface réfléchissante constituée par le miroir 17.

On voit que, du fait de la structure du dispositif de la figure 13 comportant la surface diffusante en réflexion 13b de l'élément conique 13a, d'une part, et le miroir 17, d'autre part, la caméra C reçoit après deux réflexions une grande partie du faisceau secondaire de rayons 14.

Pour permettre le passage, sans difficultés, des rayons 4 et 18, le prisme de renvoi 5a est porté par un trépied 19.

A la place de l'ensemble constitué par le laser 1, le système optique afocal 3 et le prisme de renvoi 5a de la figure 3, on peut, dans une variante illustrée sur la figure 4, prévoir simplement une diode laser 1a (avec des moyens de collimation non représentés), de petite dimension, fixée directement sur le trépied 19 constitué par trois tiges métalliques. Dans ce cas l'élément conique diffusant 13a n'a pas besoin d'être percé.

A part ces modifications, le mode de réalisation de la figure 4 est identique à celui de la figure 3 et on a utilisé les mêmes nombres de référence, à partir de la référence 6, sur la figure 4 et sur la figure 3.

Dans le mode de réalisation de la figure 4, comme dans celui de la figure 3, la caméra C reçoit, comme on le voit aisément, en tant que rayons 18, une grande partie des rayons 14 du faisceau secondaire après réflexion, d'une part, sur la surface réfléchissante 13b de l'élément 13a et, d'autre part, sur le miroir 17.

Un autre problème qui se pose dans la mise en oeuvre du procédé et du dispositif selon le brevet FR-A-2.574.180 précité provient de la diffusion qui se produit sur la surface horizontale supérieure 10 de l'échantillon 11 lorsque celui-ci est très diffusant, l'étendue de la transition d'éclairement que présente le faisceau secondaire en correspondance avec la périphérie de la goutte étant alors très difficile à observer.

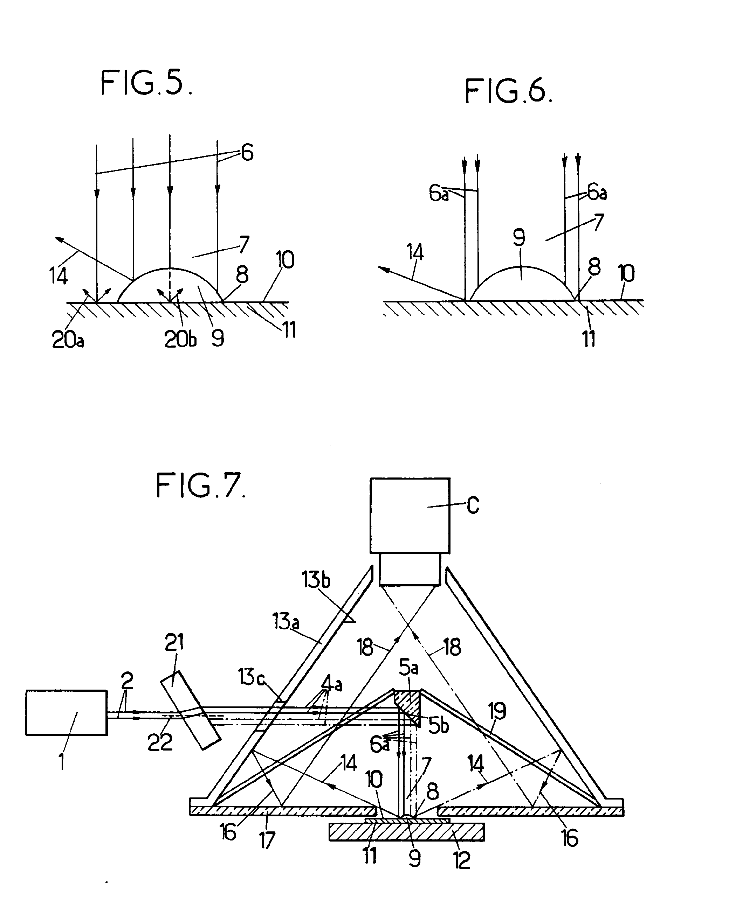

Ce phénomène est illustré sur la figure 5 sur laquelle on a représenté le faisceau primaire 6 de rayons parallèles et verticaux qui atteignent la zone 7 qui englobe la périphérie 8 de la goutte 9 et la surface plane horizontale supérieure 10 du substrat 11. Sur cette figure on a également illustré un rayon 14 du faisceau secondaire.

Le phénomène de diffusion à la surface 10 du substrat 11 est illustré par des rayons parasites 20a et 20b résultant de la réflexion de rayons 6 du faisceau primaire sur la surface 10, tant à partir de rayons 6 frappant directement cette surface 10, que de rayons 6 ayant traversé la goutte 9, d'où respectivement les rayons parasites 20a et 20b.

Selon une caractéristique complémentaire de l'invention, on pallie cet inconvénient, qui se produit lorsque le substrat est très diffusant, en éclairant la périphérie 8 de la goutte 9 par un faisceau annulaire, ce qui limite la diffusion parasite.

Ceci est illustré sur la figure 6 sur laquelle le faisceau primaire annulaire est illustré par les rayons extrêmes 6a qui arrivent au niveau de la périphérie 8 de la goutte 9 posée sur la surface 10 du substrat 11. On retrouve un rayon 14 du faisceau secondaire.

Par contre on n'a pas représenté de rayons diffusés du type 20a et 20b de la figure 5, étant donné que ceux-ci sont pratiquement inexistants dans le cas de la figure 6 lorsqu'on met en oeuvre un faisceau primaire annulaire 6a.

Sur la figure 7 on a illustré un mode de réalisation de l'invention mettant en oeuvre non seulement les perfectionnements de la figure 3, mais également le schéma de la figure 6.

Dans ce mode de réalisation, un laser 1 émet un faisceau 2 de rayons, horizontaux et parallèles, de lumière cohérente, comme dans les modes de réalisation des figures 1, 2 et 3.

Par contre le dispositif de la figure 7 ne comporte pas de système optique afocal (du type portant la référence 3 sur les figures 1, 2 et 3), mais une lame épaisse 21 à faces parallèles, qui est entraînée en rotation (par des moyens non représentés) autour de son axe de rotation 22, en étant inclinée par rapport à cet axe. La lame 21 produit, au cours de sa rotation autour de l'axe 22, à partir du faisceau 2, un faisceau annulaire 4a (on a représenté sur la figure 7 en trait plein les rayons existants effectivement à un moment donné et en traits interrompus les rayons engendrés à un autre instant au cours de la rotation de la lame 3a.

Le rayon moyen du faisceau annulaire 4a est donné par la formule R = e.cos r,(n - 1)/n, en appelant r l'angle d'inclinaison de la lame, e l'épaisseur de celle-ci et n l'indice du verre constituant la lame qui peut être par exemple égal à 1,5. En modifiant l'inclinaison de la lame 21 par rapport à son axe 22 de rotation, il est donc possible de régler R pour l'adapter à la dimension de la goutte liquide 9.

Le faisceau annulaire 4a qui est d'axe horizontal, après avoir traversé l'ouverture 13c ménagée dans l'élément conique 13a, est renvoyé par la surface 5b d'un prisme 5a, inclinée de 45° par rapport à la verticale, pour former un faisceau primaire annulaire 6a d'axe vertical qui vient frapper la zone de contact de la goutte 9 et du substrat 11, la figure 6 illustrant en fait, à plus grande échelle, la portion de la figure 7 dans laquelle les rayons 6a arrivent sur le pourtour de la goutte 9.

Comme dans le mode de réalisation de la figure 3, les rayons 6a sont réfléchis en tant que rayons 14, puis renvoyés par la surface réfléchissante 13b en tant que rayons 16, enfin par le miroir 17 en tant que rayons 18 qui sont captés par la caméra C.

Il apparaît clairement qu'avec le mode de réalisation de la figure 7 on réalise un dispositif universel pour déterminer l'angle de contact d'une goutte de liquide posée sur un substrat horizontal, solide ou liquide, du fait qu'il donne des résultats satisfaisants, même pour un angle de contact élevé, s'approchant de 45°, et même avec un substrat diffusant, du fait que la caméra C reçoit une grande partie des rayons tels que 18 provenant de l'ensemble des rayons utiles 14 du faisceau secondaire, même pour un angle de contact élevé, mais ne reçoit pratiquement pas de rayons parasites (du type 20a, 20b de la figure 5) qui pourraient être produits par diffusion lorsque le substrat est très diffusant.

## Revendications

1. Procédé pour déterminer l'angle de contact d'une goutte de liquide (9) posée sur un substrat (11), pour tout angle de contact inférieur à 45°, consistant à diriger perpendiculairement au substrat (11) un faisceau primaire (6,6a) de lumière parallèle pour éclairer une zone qui englobe l'interface entre la périphérie de la goutte (9) et le substrat (11), à déterminer la zone de transition d'éclairement, que présente un faisceau secondaire (14) résultant de l'interaction du faisceau primaire (6,6a) avec la goutte (9) et le substrat (11), sur au moins une surface réceptrice (13a,13b) interceptant ce faisceau (14), et caractérisé en ce que ladite surface réceptrice (13a,13b) est une surface diffusante en réflexion, en ce qu'on prévoit une surface réfléchissante (17) disposée à l'intérieur de ladite surface réceptrice diffusante (13a,13b) pour renvoyer les rayons lumineux (16) provenant de ladite surface réceptrice (13a,13b) diffusante, et en ce que les rayons réfléchis par ladite surface réfléchissante (17) sont collectés par une caméra (C).

2. Procédé selon la revendication 1, caractérisé en ce que le faisceau primaire (6,6a) est annulaire.

3. Dispositif, pour la mise en oeuvre du procédé selon la revendication 1, comprenant un support (12) propre à maintenir horizontal un substrat (11) sur lequel est posée une goutte de liquide (9), une source de lumière (1; 1a) associée à des moyens optiques (3, 5a, 5b; 1, 21, 5a, 5b) pour former à partir de la source de lumière un faisceau primaire (6; 6a) de lumière parallèle dirigée perpendiculairement au substrat (11), au moins une surface réceptrice (13a, 13b) entourant le substrat (11) pour intercepter le faisceau secondaire en retour (14) produit par interaction du faisceau primaire (6,6a) avec la goutte (9) et le substrat (11), et caractérisé en ce que ladite surface réceptrice (13a, 13b) est constituée par une surface diffusante en réflexion, en ce que l'on dispose une surface réfléchissante (17) à l'intérieur de ladite surface réceptrice diffusante (13a,13b) , pour réfléchir le faisceau de rayons (16) renvoyés par ladite surface réceptrice diffusante (13a,13b) , et en ce qu'il comporte une caméra (C) disposée pour collecter les rayons (18) réfléchis par ladite surface réfléchissante (17).

4. Dispositif selon la revendication 3, caractérisé en ce que la surface réceptrice diffusante (13a, 13b) a la forme d'un tronc de cône creux dont la périphérie de la petite base entoure la caméra (C) et dont la périphérie de la grande base entoure ladite surface réfléchissante (17), l'angle au sommet du cône correspondant au champ angulaire de la caméra (C).

5. Dispositif selon la revendication 3 ou 4, pour la mise en oeuvre du procédé selon la revendication 2, caractérisé en ce qu'il comporte des moyens (21) pour transformer le faisceau lumineux émis par la source de lumière (1) en un faisceau annulaire qui deviendra le faisceau primaire (6a), également annulaire.

6. Dispositif selon la revendication 5, caractérisé en ce que lesdits moyens pour transformer le faisceau lumineux émis par la source de lumière (1) en un faisceau annulaire comportent une lame à faces parallèles (21) dont l'inclinaison par rapport à un axe de rotation (22) peut être modifiée, cet axe (22) étant parallèle à la direction des rayons du faisceau lumineux (2) que reçoit la lame à faces parallèles (21) en provenance de la source de lumière (1), et des moyens pour entraîner en rotation la lame à faces parallèles (21) autour de son axe de rotation (22).

7. Dispositif selon l'une quelconque des revendications 3 à 6, caractérisé en ce que la surface réceptrice diffusante (13a, 13b) est en aluminium peint en blanc.

## Patentansprüche

1. Verfahren zur Bestimmung des Kontaktwinkels eines Flüssigkeitstropfens (9) auf einem Substrat (11) für Kontaktwinkel kleiner als 45°, wobei rechtwinklig zum Substrat (11) ein erstes Bündel (6,6a) parallelen Lichtes zum Beleuchten einer Zone gerichtet wird, die die Zwischenfläche zwischen dem Umfang des Tropfens (9) und dem Substrat (11) einschließt, um die Zone des Beleuchtungsüberganges zu bestimmen, den ein zweites Bündel (14) darstellt, das aus der gegenseitigen Wirkung des ersten Bündels (6,6a) mit dem Tropfen (9) und dem Substrat (11) resultiert, auf wenigstens einer Empfangsoberfläche (13a,13b), die dieses Bündel (14) abfängt,
dadurch gekennzeichnet,
daß die Empfangsoberfläche (13a,13b) eine diffundierende Reflektionsoberfläche ist, daß man eine reflektierende Oberfläche (17) vorsieht, die im Inneren der diffundierenden Empfangsoberfläche (13a,13b) angeordnet ist, um die aus der diffundierenden Empfangsoberfläche (13a,13b) austretenden Lichtstrahlen (16) zurückzuschicken, und daß die durch die reflektierende Oberfläche (17) reflektierten Strahlen in einer Kamera (C) gesammelt werden.

2. Verfahren nach Anspruch 1,
dadurch gekennzeichnet,
daß das erste Bündel (6,6a) ringförmig ist.

3. Vorrichtung zur Durchführung des Verfahrens nach Anspruch 1 mit einem Stützelement (12) zur horizontalen Halterung eines Substrates (11), auf dem ein Flüssigkeitstropfen (9) angeordnet ist, mit einer mit optischen Mitteln (3,5a,5b;1,21,5a,5b) verbundenen Lichtquelle (1;1a) zur Bildung eines von der Lichtquelle ausgehenden ersten Bündels (6;6a) parallelen Lichtes, welches rechtwinklig auf das Substrat (11) gerichtet wird, mit wenigstens einer Empfangsoberfläche (13a,13b), die das Substrat (11) zum Auffangen des rückwärts gerichteten zweiten Bündels (14) umgibt, das durch die gegenseitige Wirkung des ersten Bündels (6,6a) mit dem Tropfen (9) und dem Substrat (11) erzeugt wird,
dadurch gekennzeichnet,
daß die Empfangsoberfläche (13a,13b) von einer diffundierenden Reflektionsoberfläche gebildet ist, daß man eine reflektierende Oberfläche (17) im Inneren der diffundierenden Empfangsoberfläche (13,13b) zum Reflektieren des Bündels von, Strahlen (16), die durch die diffundierende Empfangsoberfläche (13a,13b) zurückgeschickt werden, anordnet und daß diese eine Kamera (C) aufweist, die zur Sammlung der durch die reflektierende Oberfläche (17) reflektierten Strahlen (18) angeordnet ist.

4. Vorrichtung nach Anspruch 3,
dadurch gekennzeichnet,
daß die diffundierende Empfangsoberfläche (13a,13b) die Form eines hohlen Kegelstumpfes hat, dessen Umfang der kleinen Basis die Kamera (C) umgibt und dessen Umfang der großen Basis die reflektierende Oberfläche (17) umgibt, wobei der Spitzenwinkel dem Winkelfeld der Kamera (C) entspricht.

5. Vorrichtung nach Anspruch 3 oder 4 zur Durchführung des Verfahrens nach Anspruch 2,
dadurch gekennzeichnet,
daß diese Mittel (21) zur Umwandlung des aus der Lichtquelle (1) emittierten Lichtbündels in ein ringförmiges Lichtbündel aufweist, welches zum gleichfalls ringförmigen ersten Bündel (6a) wird.

6. Vorrichtung nach Anspruch 5,
dadurch gekennzeichnet,
daß die Mittel zur Umwandlung des von der Lichtquelle (1) emittierten Lichtbündels in ein ringförmiges Lichtbündel eine Platte mit parallelen Flächen (21), deren Neigung im Verhältnis zu einer Rotationsachse (22) veränderbar ist, wobei diese Achse (22) parallel zur Richtung der Strahlen des Lichtbündels (2) ist, welches die Platte mit den parallelen Flächen (21) beim Heraustreten aus der Lichtquelle (1) empfängt und Mittel zum Bewirken einer Drehbewegung der Platte mit parallelen Flächen (21) um ihre Rotationsachse (22) aufweisen.

7. Vorrichtung nach einem der Ansprüche 3 bis 6,
dadurch gekennzeichnet,
daß die diffundierende Empfangsoberfläche (13a,13b) aus geweißtem Aluminium besteht.

## Claims

1. Method for determining the contact angle of a drop (9) of liquid placed on a substrate (11), for any contact angle less than 45°, which consists in directing perpendicularly to the substrate (11) a primary beam (6, 6a) of parallel light for illuminating a zone which contains the interface between the periphery of the drop (9) and the susbtrate (11), determining the illumination transition zone presented by a secondary beam (14) resulting from the interaction of the primary beam (6, 6a) with the drop and the substrate (11), on at least one receiving surface (13a, 13b) intercepting this beam (14), and is characterized in that said receiving surface (13a, 13b) is a reflection diffusing surface, in that a reflecting surface (17) is provided disposed inside said diffusing receiving surface (13a, 13b) for reflecting the light rays (16) from said diffusing receving surface, and in that the rays reflected by said reflecting surface (17) are collected by a camera (C).

2. Method according to claim 1, characterized in that the primary beam (6, 6a) is annular.

3. Device for implementing the method of claim 1, said device comprising a support (12) adapted for holding a substrate (11) horizontal on which is placed a drop of liquid (9), a light source (1, 1a) associated with optical means (3,5a,5b ; 1,21,5a,5b) for forming from the light source a primary beam (6, 6a) of parallel light directed perpendicularly to the substrate (11), at least on receiving surface (13a, 13b) surrounding the substrate (11) for intercepting the returning secondary beam (14) produced by interaction of the primary beam (6, 6a) with the drop (9) and the substrate (11), and is characterized in that said receiving surface (13a, 13b) is formed by a reflection diffusing surface, in that a reflecting surface (17) is disposed inside said diffusing receiving surface (13a, 13b) for reflecting the beam of rays (16) reflected by said diffusing receiving surface (13a, 13b) and in that it comprises a camera (C) disposed for collecting the rays (18) reflected by said reflecting surface.

4. Device according to claim 3, characterized in that the diffusing receiving surface (13a, 13b) has the form of a hollow truncated cone whose small base periphery surrounds the camera (C) and whose large base periphery surrounds said reflecting surface (17), the angle of the apex of the cone corresponding to the angular field of the camera (C).

5. Device according to claim 3 or 4 for implementing the method according to claim 2, characterized in that it comprises means (21) for transforming the light beam emitted by the light source (1) into an annular beam which will become the primary beam (6a) also annular.

6. Device according to claim 5, characterized in that said means for transforming said light beam emitted by the light source (1) into an annular beam comprise a plate with parallel faces (21) whose inclination with respect to an axis of rotation (22) may be modified, this axis (22) being parallel to the direction of the rays of the light beam (2) which the plate with parallel faces (21) receives from the light source (1), and means for rotating the plate with parallel faces (21) about its axis of rotation.

7. Device according to one of claims 3 to 6, characterized in that the diffusing receiving surface (13a, 13b) is made from aluminium painted white.
